# EUROPÄISCHE PATENTANMELDUNG

(11) **EP 4 246 758 A1**
(43) Veröffentlichungstag der Anmeldung: **20.09.2023**
(21) Anmeldenummer: 22162762.3
(22) Anmeldetag: 17.03.2022
(51) Int. Cl.: H02J 7/00

(54) **LADESTATION, HAARSCHNEIDEVORRICHTUNG UND ADAPTER FÜR DIESE**

(71) Anmelder: Wahl GmbH, 78112 St. Georgen (DE)
(72) Erfinder: Dotter, Ralf, 78112 St. Georgen (DE)
(74) Vertreter: Stolmár & Partner Patentanwälte PartG mbB

(57) **Zusammenfassung**

Offenbart ist eine Ladestation (100) zum Aufladen einer Batterieeinrichtung in einer Haarschneidevorrichtung (300), umfassend einen Hauptkörper (105) zum Stabilisieren der Ladestation (100) und eine Anschlusseinrichtung (120) zum elektrischen Verbinden der Haarschneidevorrichtung (300) mit der Ladestation (100) dadurch gekennzeichnet, dass die Anschlusseinrichtung (120) zwei Kontaktelemente (130) und ein magnetisches, insbesondere permanentmagnetisches, oder magnetisch reaktives Halteelement (140) aufweist.

## Beschreibung

### Gebiet der Erfindung

Die Erfindung betrifft eine Ladestation zum Aufladen einer Batterieeinrichtung in einer Haarschneidevorrichtung, einen Adapter zum Anpassen eines Steckkontakts einer Haarschneidevorrichtung, eine Haarschneidevorrichtung sowie eine Kombination aus einer solchen Ladestation und einer solchen Haarschneidevorrichtung.

### Stand der Technik

Es existieren unterschiedliche elektrische Haarschneidevorrichtungen, die je nach Verwendungszeck unterschiedliche Größen - von kleinen Trimmern, über Rasierer bis zu großen Haarschneidevorrichtung für das Haupthaar - und damit einhergehend teilweise auch unterschiedlich ausgebildete elektrische Kontaktelemente aufweisen.

In Friseursalons wird meist eine Vielzahl unterschiedlicher elektrischer Haarschneidevorrichtungen verwendet. Damit diese ständig einsatzbereit sind, müssen deren Batterieeinrichtungen ständig zumindest zu einem großen Anteil aufgeladen sein. Das führt dazu, dass in den Friseursalons eine Vielzahl unterschiedlicher Ladestationen verwendet wird, die zu einem großen Teil auch gerätespezifisch ausgebildet sind. Dadurch ist einerseits ein großer Anteil der Arbeitsfläche mit Ladestationen besetzt und andererseits muss der Friseur nach Verwenden einer Haarschneidevorrichtung umständlich die dafür passende Ladestation aufsuchen, um die Haarschneidevorrichtung korrekt ablegen zu können. Teilweise wird durch den Friseur, wenn er nicht auf Anhieb die passenden Ladestation findet beziehungsweise diese nicht unmittelbar für ihn zugängig ist, die Haarschneidevorrichtung auch auf irgendeine freie Stelle der Arbeitsfläche abgelegt, was dazu führen kann, dass die Haarschneidevorrichtung später nicht auffindbar ist, nicht aufgeladen und damit nicht verwendbar ist oder sogar heruntergeworfen wird, da sie während des teilweise zügigen Friseurbetriebs übersehen wurde. Außerdem muss das Zusammenstecken von Haarschneidevorrichtung und Ladestation aufgrund der formschlüssigen Stecker oft sehr genau durchgeführt werden, damit die entsprechenden Kontakte auch sicher miteinander verbunden sind.

### Darstellung der Erfindung

Aufgabe der vorliegenden Erfindung ist es daher, dem Nutzer zu ermöglichen, eine Vielzahl unterschiedlicher Haarschneidevorrichtungen auf einfache Weise und sicher in eine einfach zu erreichende und passende Ladestation ablegen zu können.

Die Aufgabe wird gelöst durch eine Ladestation nach Anspruch 1, einem Adapter nach Anspruch 3, einer Haarschneidevorrichtung nach Anspruch 4 und einer Kombination aus einer solchen Ladestation und einer solchen Haarschneidevorrichtung nach Anspruch 12. Weitere die Erfindung ausgestaltende Merkmale sind in den abhängigen Ansprüchen enthalten.

Eine erfindungsgemäße Ladestation zum Aufladen einer Batterieeinrichtung in einer Haarschneidevorrichtung, umfasst einen Hauptkörper und eine Anschlusseinrichtung zum elektrischen Verbinden der Haarschneidevorrichtung mit der Ladestation und ist dadurch gekennzeichnet, dass die Anschlusseinrichtung zwei elektrische Kontaktelemente und ein magnetisches, insbesondere permanentmagnetisches, oder magnetisch reaktives Halteelement aufweist. Die Anschlusseinrichtung kann in dem Hauptkörper angeordnet sein. Der Hauptkörper kann als Ablage für die Haarschneidevorrichtung ausgebildet sein und kann selber auf eine Fläche abgestellt werden, bspw. auf Standfüßen. Der Hauptkörper kann aber auch ein Netzteil darstellen, das direkt in eine Steckdose gesteckt werden kann und dann über ein Kabel mit der Anschlussvorrichtung verbunden wird. Die zwei Kontaktelemente der Ladestation sind dazu eingerichtet, zwischen der Anschlusseinrichtung der Ladestation und der Haarschneidevorrichtung einen elektrischen Kontakt herzustellen und so die Batterieeinrichtung der Haarschneidevorrichtung aufzuladen. Mit einer solchen Haarschneidevorrichtung wird es ermöglicht, die elektrischen Kontakte der Haarschneidevorrichtung und einer entsprechenden Ladestation einfach zu verbinden, weil die Magnetischen oder magnetisch reaktiven Halteelemente die Haarschneidevorrichtung in eine vorbestimmte Ausrichtung drängen.

Das Halteelement ist derart ausgebildet, dass es entweder selbst ein Magnet ist beziehungsweise einen solchen aufweist, das heißt magnetisch ist oder aus einem magnetisch reaktiven Material besteht beziehungsweise ein solches magnetisch reaktives Material aufweist. Dabei kann das Halteelement ein Elektromagnet sein beziehungsweise einen solchen aufweisen beziehungsweise insbesondere ein Permanentmagnet sein beziehungsweise einen solchen aufweisen. Der Permanentmagnet kann dabei unterschiedliche Formen aufweisen, insbesondere ein Scheibenmagnet, ein Stabmagnet, ein Quadermagnet, ein Kugelmagnet, ein Ringmagnet, ein Konusmagnet, ein Topfmagnet, ein Magnetband oder eine Magnetfolie sein. Das magnetisch reaktive Material kann insbesondere ein magnetisierbares Material, wie ein magnetisierbares ferromagnetisches Material (beispielsweise Eisen, Cobalt oder Nickel) sein beziehungsweise aufweisen. Das magnetisch reaktive Material kann darüber hinaus ein diamagnetisches oder paramagnetisches Material sein. Das Halteelement ist bevorzugt kreisförmig ausgebildet, kann aber auch eine der- vier-, fünf-, sechs- oder andere mehreckige Form haben. Ferner kann das Halteelement mit eine unregelmäßige bzw. nicht rotationssymmetrische Kontur aufweisen (bspw. U-förmig), so dass es mit einem anderen Halteelement in nur einer vorbestimmten Ausrichtung mit den kompletten Berührflächen vollständig anliegt. Dadurch kann auch ein Verpolschutz der Kontaktelemente erreicht werden.

Vorzugsweise weist der Hauptkörper eine Lagerfläche zum Ablegen beziehungsweise Abstellen der Haarschneidevorrichtung auf. Derart wird eine sichere Positionierung der Haarschneidevorrichtung ermöglicht. Als Ablegen der Haarschneidevorrichtung auf die Ladestation wird erfindungsgemäß insbesondere deren Ablegen auf einer ihrer längsseitig orientierten Flächen als auch deren Ablegen beziehungsweise Abstellen auf ihrem Boden, das heißt auf der Seite der Anschlusseinrichtung verstanden.

Vorzugsweise weist die Ladestation ferner eine Abdeckplatte auf, die derart ausgebildet und angeordnet ist, dass sie die Lagerfläche zumindest teilweise abdeckt. Derart kann die Ladestation vor Verschmutzungen geschützt werden, wodurch deren Haltbarkeit gesteigert wird. Ferner kann dadurch auch die Optik der Oberfläche verbessert werden, bspw. mit verschiedenen Mustern oder Logos. In einer anderen Ausgestaltung kann die Abdeckplatte zumindest auf einer Seite mit einer größeren Materialstärke, bspw. 2 cm, 3 cm, 4 cm oder mehr ausgebildet sein und so als Stütze fungieren.

Vorzugsweise ist die Abdeckplatte ferner austauschbar ausgebildet. Derart wird es auf einfache Art und Weise ermöglicht, eine verschmutzte Abdeckplatte von der Ladestation zu entfernen und zu reinigen. Ferner wird es derart ermöglicht, verschieden ausgestaltete Abdeckplatten zu verwenden, beispielsweise verschieden farbige Abdeckplatten, um die Zuordnung zu spezifischen Nutzern zu vereinfachen oder mit Unternehmenslogos versehene Abdeckplatten, um die vom Verbraucher beziehungsweise Kunden wahrgenommene Wertigkeit der Ladestation zu erhöhen.

Vorzugsweise weist die Ladestation ferner ein Anschlussgehäuse auf, wobei das Anschlussgehäuse derart ausgebildet und angeordnet ist, dass in diesem die Anschlusseinrichtung der Ladestation rotierbar und linear verfahrbar gelagert ist. Vorzugsweise wird dabei im Aufladezustand - Haarschneidevorrichtung ist mit der Ladestation verbunden - die Haarschneidevorrichtung auf die Lagerfläche abgelegt.

Derart kann die Ladestation für Haarschneidevorrichtungen mit unterschiedlicher Gehäusegeometrie - unterschiedlicher Abstand zwischen den Anschlusseinrichtungen der Haarschneidevorrichtungen zur Lagerfläche sowie unterschiedliche Winkelausrichtung der Anschlusseinrichtungen der Haarschneidevorrichtungen zur Lagerfläche im Zustand der abgelegten Haarschneidevorrichtung - verwendet werden, indem die Anschlusseinrichtung der Ladestation entsprechend der benötigten Winkelausrichtung und des benötigten Abstands positioniert wird.

Vorzugsweise umfasst die Ladestation ferner zumindest ein Stützelement zum Halten der Haarschneidevorrichtung. Derart kann die Haarschneidevorrichtung so gehalten werden, dass die auf die Anschlusseinrichtung, insbesondere die auf die Kontaktelemente wirkende Kraft minimiert wird.

Das Stützelement kann derart ausgebildet sein, dass es in unmittelbarer Nähe der Anschlusseinrichtung die Haarschneidevorrichtung hält beziehungsweise stützt. Darüber hinaus kann das Stützelement insbesondere derart ausgebildet sein, dass es seine stützende beziehungsweise haltende Wirkung auf die Haarschneidevorrichtung von der Anschlusseinrichtung entfernt ausübt.

Es können ferner zwei oder mehr Stützelemente vorgesehen sein. Derart kann insbesondere erreicht werden, dass unterschiedliche Haarschneidevorrichtungen mit unterschiedlichen Gehäusegeometrien jeweils sicher gehalten werden können.

Vorzugsweise ist das Stützelement zudem so ausgebildet, dass das Stützelement abseits des Handhabungsbereiches der Haarschneidevorrichtung auf diese einwirkt, beispielsweise im Fuß- oder Kopfbereich der Haarschneidevorrichtung. Derart wird es ermöglicht, die Haarschneidevorrichtung möglichst einfach abzulegen und wieder aufzunehmen ist.

Das Stützelement kann dabei als Lehnelement ausgebildet sein, das derart ausgebildet ist, dass die Haarschneidevorrichtung an dieses anlehnbar ist. Das Stützelement kann ferner auch als Positionierstift ausgebildet sein. Insbesondere ein Positionierstift ist ein sehr Platz sparendes Stützelement.

Vorzugsweise ist das Stützelement reversibel mit der Ladestation verbunden. Derart kann bei Bedarf - wenn beispielsweise eine Haarschneidevorrichtung mit anderer Gehäusegeometrie mit Hilfe der Ladestation elektrisch aufgeladen werden soll - schnell und einfach ein passendes Stützelement verwendet werden. Auf diese Weise wird die Variabilität der Ladestation erhöht.

Vorzugsweise ist die Lagerfläche verkippbar ausgestaltet. Derart können mittels des Verkippens der Lagerfläche mit der Ladestation zum elektrischen Aufladen verbundene Haarschneidevorrichtungen mit unterschiedlicher Gehäusegeometrie so verkippt werden, dass diese sicher vom Stützelement gestützt werden beziehungsweise sicher am Lehnelement anlehnen. Auf diese Weise wird die Variabilität der Ladestation erhöht.

Vorzugsweise ist das als Positionierstift ausgebildete Stützelement in der Anschlusseinrichtung ausgebildet. Derart kann ein geringer Bauraum bei gleichzeitig hoher Stützwirkung erzielt werden.

Vorzugsweise weist eine zur den Positionierstift aufweisenden Anschlusseinrichtung komplementäre Anschlusseinrichtung eine Positioniervertiefung auf, die derart ausgebildet ist, dass diese den Positionierstift aufnehmen kann. Derart kann eine hohe Stützwirkung erzielt werden und die Haarschneidevorrichtung gleichzeitig präzise ausgerichtet werden.

Vorzugsweise weist die Ladestation eine Statusanzeige auf, die derart ausgebildet ist, dass mit dieser dem Benutzer anzeigbar ist, dass eine Haarschneidevorrichtung mit der Ladestation korrekt verbunden ist, so dass die Batterieeinrichtung der Haarschneidevorrichtung elektrisch aufgeladen werden kann. Derart kann für die Haarschneidevorrichtung ein Verpolschutz bereitgestellt werden, so dass die Haarschneidevorrichtung im abgelegten beziehungsweise abgestellten Zustand elektrisch aufladbar ist und eine fehlerhafte Verbindung der Kontaktelemente vermieden wird.

Vorzugsweise ist die Statusanzeige ferner derart ausgebildet, dass mit dieser der Ladezustand der Batterieeinrichtung der Haarschneidevorrichtung anzeigbar ist. Derart kann der Benutzer der Haarschneidevorrichtung darüber informiert werden, ob die Haarschneidevorrichtung einsatzbereit ist beziehungsweise wann diese einsatzbereit sein wird, wodurch die Handhabbarkeit verbessert wird.

Vorzugsweise umfasst die Ladestation ferner eine Batterieeinrichtung. Damit wird es ermöglicht, die Ladestation selbst aufzuladen, sodass auf eine elektrische Verkabelung auf der Arbeitsfläche des Nutzers verzichtet werden kann. Derart wird die Handhabbarkeit der Ladestation verbessert.

Vorzugsweise weist dann die Batterieeinrichtung der Ladestation eine größere elektrische Kapazität auf als die Batterieeinrichtung der Haarschneidevorrichtung. Derart wird es ermöglicht, innerhalb eines Ladezyklus der Batterieeinrichtung der Ladestation mehrere Batterieeinrichtungen der Haarschneidevorrichtungen bzw. eine Batterieeinrichtung einer Haarschneidevorrichtung mehrfach aufzuladen. Damit wird die mögliche Betriebszeit der Haarschneidevorrichtungen auf einfache Art und Weise erhöht.

Ein erfindungsgemäßer Adapter zum Anpassen eines Steckkontakts einer Haarschneidevorrichtung umfasst einen Hauptkörper mit einer Steckeinrichtung, die zum Anstecken des Adapters an eine Anschlusseinrichtung einer Haarschneidevorrichtung ausgebildet ist und eine Anschlusseinrichtung, die mit einer Anschlusseinrichtung einer Ladestation in Kontakt bringbar ist und wobei die Anschlusseinrichtung zwei Kontaktelemente und ein magnetisches, insbesondere permanentmagnetisches, oder magnetisch reaktives Halteelement aufweist. Derart wird es ermöglicht, eine Haarschneidevorrichtung mit einem kostengünstigen und einfach zu handhabenden Adapter nachzurüsten, sodass diese mit einer erfindungsgemäßen Ladestation verwendbar ist.

Die zwei Kontaktelemente des Adapters sind dazu geeignet, zwischen der Anschlusseinrichtung der Ladestation und der Haarschneidevorrichtung über den Hauptkörper des Adapters derart einen elektrischen Kontakt herzustellen, dass die Batterieeinrichtung der Haarschneidevorrichtung gegebenenfalls über weitere, in der Haarschneidevorrichtung und/oder in dem Adapter vorgesehene elektrische Kontaktbeziehungsweise Verbindungselemente mit elektrischem Strom aufgeladen werden kann.

Eine erfindungsgemäße Haarschneidevorrichtung umfasst eine Klingenanordnung zum Schneiden, eine Antriebsvorrichtung, die die Klingenanordnung antreibt, eine Batterieeinrichtung, die die Antriebsvorrichtung mit elektrischem Strom versorgt und eine Anschlusseinrichtung, die mit der Batterieeinrichtung elektrisch verbunden ist und die zum Aufladen der Batterieeinrichtung mit einer Anschlusseinrichtung einer Ladestation in Kontakt bringbar ist, wobei die Anschlusseinrichtung zwei Kontaktelemente und ein magnetisches, insbesondere permanentmagnetisches, oder magnetisch reaktives Halteelement aufweist.

Die zwei Kontaktelemente der Haarschneidevorrichtung sind dazu geeignet, zwischen der Anschlusseinrichtung der Ladestation und der Haarschneidevorrichtung derart einen elektrischen Kontakt herzustellen, dass die Batterieeinrichtung der Haarschneidevorrichtung gegebenenfalls über weitere, in der Haarschneidevorrichtung vorgesehene elektrische Kontakt- beziehungsweise Verbindungselemente mit elektrischem Strom aufgeladen werden kann.

Vorzugsweise weist die Anschlusseinrichtung der Ladestation, des Adapters oder der Haarschneidevorrichtung eine nach innen gewölbte Aussparung oder einen nach außen gewölbten Vorsprung auf. Derart wird neben der durch Magnetwirkung erzeugten Haltewirkung der Halteelemente ferner eine durch Formschluss erzeugte Haltewirkung erzeugt, sodass ein sichererer Halt der Haarschneidevorrichtung in der Ladestation erzeugt wird.

Vorzugsweise sind die Aussparung und der Vorsprung komplementär zueinander ausgebildet und ferner derart ausgebildet, dass diese beziehungsweise die Ladestation, der Adapter und/oder die Haarschneidevorrichtung, die die Aussparung beziehungsweise den Vorsprung aufweisen, gegeneinander verschwenkbar sind. Die Verschwenkbarkeit kann auch mittels eines Führungsstift und/oder einer Führungsnut verwirklicht sein. Derart wird es ermöglicht, eine Vielzahl unterschiedlicher Haarschneidevorrichtungen mit unterschiedlichen Gehäusegeometrien mit einer einzigen Ladestation auf sichere Art und Weise verwenden zu können.

Vorzugsweise sind die Aussparung und der Vorsprung jeweils halbzylinderförmig ausgebildet, wobei der Radius der halbzylindrischen Aussparung im Wesentlichen so groß ist wie der Radius des halbzylindrischen Vorsprungs. Derart wird ein hoher Grad der Verschwenkbarkeit ermöglicht und damit eine hohe Variabilität hinsichtlich der unterschiedlichen Gehäusegeometrien der Haarschneidevorrichtungen.

Vorzugsweise decken die zwei Kontaktelemente der Ladestation, des Adapters oder der Haarschneidevorrichtung zusammen mit deren zumindest einem Halteelement die Aussparung oder den Vorsprung vollständig ab. Derart kann - aufgrund einer möglichst großen Kontaktfläche - eine sichere elektrische Kontaktierung und eine hohe Haltekraft erzielt werden.

Vorzugsweise ist zumindest eines der zwei Kontaktelemente der Ladestation, des Adapters oder der Haarschneidevorrichtung als Kontaktvorsprung, als Kontaktvertiefung und/oder als Kontaktstreifen ausgebildet. Derart wird eine sichere Kontaktierung auch bei Verwendung unterschiedlicher Haarschneidevorrichtungen mit ein und derselben Ladestation ermöglicht.

Vorzugsweise weist das als Kontaktvorsprung ausgebildete Kontaktelement eine Stiftform auf und ist insbesondere gleich oder kürzer als 3 mm, besonders bevorzugt 2 mm und am meisten bevorzugt 1,5 mm.

Vorzugsweise ist das als Kontaktvorsprung ausgebildete Kontaktelement ferner als zurückweichender, federnder Kontaktvorsprung ausgebildet. Dazu kann in dem Kontaktelement ferner ein Federelement vorgesehen sein. Derart kann eine sichere elektrische Kontaktierung bei gleichzeitig sicherer magnetischer Haltewirkung erreicht werden.

Vorzugsweise ist das als Kontaktstreifen ausgebildete Kontaktelement innerhalb der nach innen gewölbten Aussparung beziehungsweise auf dem nach außen gewölbten Vorsprung entlang des Verschwenkradiusses über die/den gesamte(n) Aussparung/Vorsprung vorgesehen. Derart wird es ermöglicht, dass auch bei Verschwenken der Haarschneidevorrichtung gegenüber der Ladestation eine sichere elektrische Kontaktierung bestehen bleibt.

Vorzugsweise sind bei der Ladestation, dem Adapter oder der Haarschneidevorrichtung zumindest zwei Halteelemente vorgesehen, die insbesondere magnetisch entgegengesetzt gepolt sind. Derart kann während des Betriebs eine korrekte elektrische Kontaktierung damit sichergestellt werden, dass mittels der durch die unterschiedlich gepolten magnetisch wirkenden Halteelemente lediglich eine einzige Ablegeposition der Haarschneidevorrichtung auf der Ladestation existiert. Damit kann die Betriebssicherheit verbessert und die Handhabung vereinfacht werden.

Vorzugsweise ist bei der Ladestation, dem Adapter oder der Haarschneidevorrichtung zumindest eines der zwei Kontaktelemente als magnetisches Halteelement ausgebildet oder das Halteelement benachbart zu dem Kontaktelement angeordnet ist. Derart wird ein verkleinerter Bauraum der Anschlusseinrichtung ermöglicht, wodurch die Produktionskosten verringert werden können und auch der benötigte Platz auf der Arbeitsfläche des Nutzers verringert werden kann, wodurch wiederum die Handhabbarkeit verbessert wird.

Vorzugsweise weisen das zumindest eine Halteelement und/oder die zwei Kontaktelemente der Ladestation, des Adapters oder der Haarschneidevorrichtung eine runde, insbesondere kreisförmige, oder streifenförmige Kontaktfläche auf. Derart wird eine einfache Positionierung der gegebenenfalls einen Adapter aufweisenden Haarschneidevorrichtung auf der Ladestation ermöglicht, wodurch die Handhabbarkeit verbessert wird.

Vorzugsweise sind die zwei Kontaktelemente der Ladestation, des Adapters, oder der Haarschneidevorrichtung unterschiedlich formschlüssig ausgebildet. Derart wird es ermöglicht, zusätzlich über einen Formschluss geometrisch sicherzustellen, dass keine falsche elektrische Kontaktierung erfolgt, wodurch die Lebensdauer der Komponenten erhöht wird. Eine andere Art des sicheren Verpolschutzes kann auch über eine asymmetrische Anordnung der Kontaktelemente bereitgestellt werden.

Bei einer erfindungsgemäßen Kombination aus einer vorhergehend dargestellten Ladestation und einer vorhergehend dargestellten Haarschneidevorrichtung oder Haarschneidevorrichtung aufweisend einen einer vorhergehend dargestellten Adapter sind die Anschlusseinrichtungen zueinander komplementär ausgebildet, insbesondere auch bezüglich der magnetischen Halteelemente. Derart wird eine einfache Handhabbarkeit der vorgenannten Ladestation in Kombination mit der vorgenannten Haarschneidevorrichtung ermöglicht.

Vorzugsweise erfolgt die zueinander komplementäre Ausbildung der magnetischen Halteelemente derart, dass ein magnetisches Halteelement an der Kontaktfläche zu dem anderen magnetischen Halteelement einen Nordpol aufweist und das andere magnetische Halteelement an dessen Kontaktfläche zu dem einen magnetischen Halteelement einen Südpol aufweist.

### Kurze Beschreibung der Figuren

Fig. 1a zeigt eine Anschlusseinrichtung aufweisend einen nach außen gewölbten Vorsprung, zwei Halteelemente mit kreisförmig ausgebildeter Kontaktfläche und zwei als Kontaktstreifen ausgebildete Kontaktelemente.
Fig. 1b zeigt eine zur in Fig. 1a gezeigten Anschlusseinrichtung komplementäre Anschlusseinrichtung aufweisend eine nach innen gewölbte Aussparung, zwei Halteelemente mit kreisförmig ausgebildeter Kontaktfläche und zwei als Kontaktvorsprung ausgebildete Kontaktelemente.
Fig. 1c zeigt die in den Fig. 1a und 1b gezeigten Anschlusseinrichtungen, die sich miteinander im Eingriff befinden in einem verschwenkten Zustand.
Fig. 1d zeigt eine zu der in Fig. 1a dargestellten Anschlusseinrichtung ähnliche Anschlusseinrichtung mit einem mittig auf dem Vorsprung angeordneten Halteelement.
Fig. 1e zeigt den Stecker einer Ladestation, der in eine Anschlusseinrichtung eines Adapters oder einer Haarschneidevorrichtung steckbar ist;
Fig. 1f zeigt eine zum Stecker komplementäre Anschlusseinrichtung für einen Adapter oder eine Haarschneidevorrichtung;
Fig. 2a zeigt eine zu der in Fig. 1a gezeigten Anschlusseinrichtung ähnliche Anschlusseinrichtung aufweisend zwei Halteelemente mit streifenförmig ausgebildeter Kontaktfläche.
Fig. 2b zeigt eine zur in Fig. 2a gezeigten Anschlusseinrichtung komplementäre Anschlusseinrichtung, die außerdem zu der in Fig. 1b gezeigten Anschlusseinrichtung ähnlich ist aufweisend zwei Halteelemente mit streifenförmig ausgebildeter Kontaktfläche.
Fig. 2c zeigt eine zu der in Fig. 2a gezeigten Anschlusseinrichtung ähnliche Anschlusseinrichtung aufweisend zwei als Scheibenmagneten ausgebildete Halteelemente.
Fig. 3a zeigt eine zu den in den Fig. 1a, 2a und 2c gezeigten Anschlusseinrichtungen ähnliche Anschlusseinrichtung, bei der die zwei als Kontaktstreifen ausgebildeten Kontaktelemente zusammen mit dem Halteelement den Vorsprung vollständig abdecken.
Fig. 3b zeigt eine zur in Fig. 3a gezeigten Anschlusseinrichtung komplementäre Anschlusseinrichtung, bei der die zwei als Kontaktvorsprung ausgebildeten Kontaktelemente zusammen mit dem Halteelement die Aussparung vollständig abdecken.
Fig. 4a zeigt eine Anschlusseinrichtung aufweisend eine Positioniervertiefung.
Fig. 4b zeigt eine zur in Fig. 4a gezeigten Anschlusseinrichtung komplementäre Anschlusseinrichtung aufweisend einen Positionierstift.
Fig. 5a zeigt eine Ladestation aufweisend ein als Lehnelement ausgebildetes Stützelement.
Fig. 5b zeigt eine Kombination aus der in Fig. 5a gezeigten Ladestation mit verkippter Lagerfläche auf die eine Haarschneidevorrichtung abgestellt ist.
Fig. 6a zeigte eine Ladestation aufweisend ein als Positionierstift ausgebildetes Stützelement.
Fig. 6b zeigt die die in Fig. 6a gezeigte Ladestation auf die eine Haarschneidevorrichtung abgestellt ist.
Fig. 6c zeigt eine zu der in Fig. 6a gezeigten Ladestation ähnliche Ladestation aufweisend ein als Ringmagneten ausgebildetes Halteelement.
Fig. 7a zeigt eine Kombination aus einer Ladestation aufweisend ein Anschlussgehäuse, in das eine Anschlusseinrichtung integriert ist, und einer abgelegten Haarschneidevorrichtung.
Fig. 7b zeigt das Anschlussgehäuse und die in dieses integrierte Anschlusseinrichtung der in Fig. 7a gezeigten Ladestation.
Fig. 8 zeigt eine Explosionsansicht einer Kombination aus einer Haarschneidevorrichtung, einem Adapter und einer Ladestation aufweisend eine Deckplatte.
Fig. 9a zeigt eine Ladestation mit einer Anschlusseinrichtung aufweisend einen Vorsprung.
Fig. 9b zeigt einen unteren Teil einer mit der in Fig. 9a gezeigten Ladestation verwendbare Haarschneidevorrichtung mit einer eine Aussparung aufweisenden Anschlusseinrichtung.
Fig. 10a zeigt eine Kombination aus einer Haarschneidevorrichtung aufweisend zwei als Kontaktvorsprünge ausgebildete Kontaktelemente und einer Ladestation aufweisend zwei als Kontaktstreifen ausgebildete Kontaktelemente und eine Statusanzeige im Zustand unmittelbar vor der Ablage der Haarschneidevorrichtung.
Fig. 10b zeigt die in Fig. 10a gezeigte Kombination aus einer Haarschneidevorrichtung und einer Ladestation im Zustand der abgelegten Haarschneidevorrichtung.
Fig. 10c zeigt eine zu der in den Fig. 10a und 10b gezeigten Kombination aus einer Haarschneidevorrichtung und einer Ladestation ähnliche Kombination aus einer Haarschneidevorrichtung und einer Ladestation aufweisend eine Vielzahl neben den Kontaktstreifen der Ladestation positionierter gegenüber den Halteelementen der Haarschneidevorrichtung magnetisch abstoßend wirkender Halteelemente.
Fig. 11 zeigt eine Kombination aus einer Haarschneidevorrichtung und einer eine Statusanzeige und eine Batterieeinrichtung aufweisenden Ladestation.

### Beschreibung der bevorzugten Ausführungsformen XXX

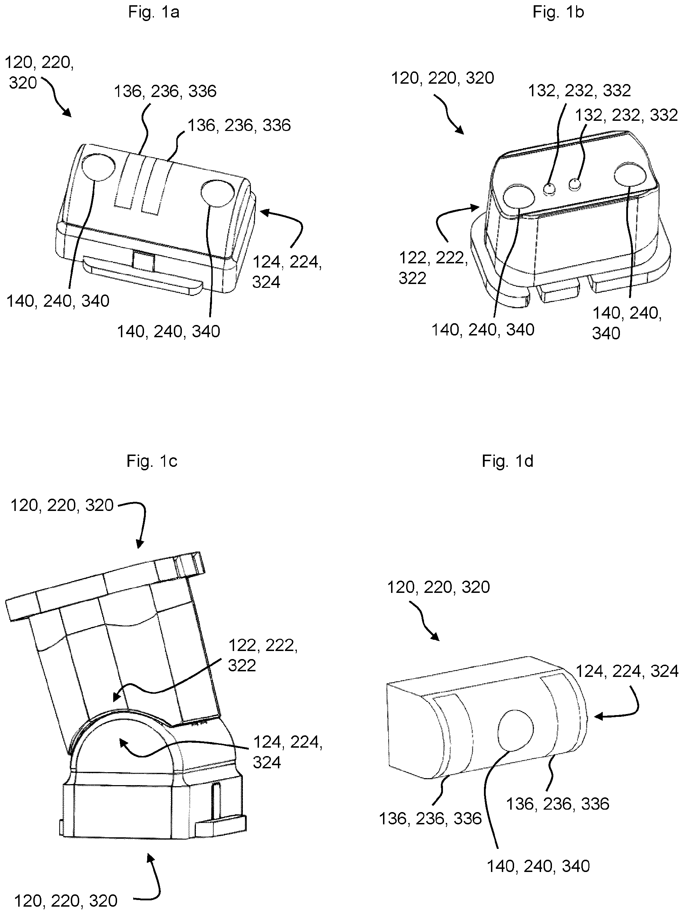

Im Folgenden werden lediglich die bevorzugten Ausführungsformen der Anschlusseinrichtungen 120, 220, 320 von Ladestation 100, Adapter 200 und Haarschneidevorrichtung 300 beschrieben. Das bedeutet, dass die Aussparungen 122, 222, 322 und die Vorsprünge 124, 224, 324, die Kontaktelemente 130, 136, 230, 236, 330, 336 und die Kontaktvorsprünge 132, 232, 332, und auch die jeweiligen Haltelemente 140, 240, 340 jeweils vertauscht sein können. Ein konkreter Fall ist im Anschluss an die Figuren 1a und 1b ausdrücklich beschrieben, der aber auch für alle anderen Paarungen der Anschlusseinrichtungen 120, 220, 320 gilt.

Fig. 1a zeigt eine Anschlusseinrichtung 120, 220, 320 aufweisend einen nach außen gewölbten Vorsprung 124, 224, 324, zwei Halteelemente 140, 240, 340 mit kreisförmig ausgebildeter Kontaktfläche und zwei als Kontaktstreifen 136, 236, 336 ausgebildete Kontaktelemente.

Fig. 1b zeigt eine zur in Fig. 1a gezeigten Anschlusseinrichtung 120, 220, 320 komplementäre Anschlusseinrichtung 120, 220, 320 aufweisend eine nach innen gewölbte Aussparung 122, 222, 322, zwei Halteelemente 140, 240, 340 mit kreisförmig ausgebildeter Kontaktfläche und zwei als Kontaktvorsprung 132, 232, 332 ausgebildete Kontaktelemente.

Die in Fig. 1a gezeigte Anschlusseinrichtung 120, 220, 320 kann mit der in Fig. 1b gezeigten Anschlusseinrichtung 120, 220, 320 derart in Eingriff gebracht werden (siehe Fig. 1c), dass die auf dem Vorsprung 124, 224, 324 angeordneten Halteelemente 140, 240, 340 die in der Aussparung 122, 222, 322 angeordneten Halteelemente 140, 240, 340 berühren. Ferner sind dann auch die Kontaktstreifen 136, 236, 336 mit den Kontaktvorsprüngen 132, 232, 332 berührend in Kontakt gebracht. Hier ist dargestellt, dass der Vorsprung 124, 224, 324 in Fig. 1a die Kontaktstreifen 136, 236, 336 aufweist und die Aussparung 122, 222, 322 die Kontaktvorsprünge oder Kontaktstifte 132, 232, 332. Es ist aber ebenso möglich, dass die Kontaktvorsprünge 132, 232, 332 auf dem Vorsprung 124, 224, 324 und die Kontaktstreifen 136, 236, 336 in der Aussparung 122, 222, 322 ausgebildet sind. Ferner ist es auch möglich, dass die Kontaktvorsprünge 132, 232, 332 streifenförmig ausgebildet sind und die kreisförmigen Kontaktelemente mit der Fläche des Vorsprungs 124, 224, 324 oder der Aussparung 122, 222, 322 angeglichen ist. Wie oben erwähnt, gilt dies auch für alle anderen Ausführungsformen.

Die in Fig. 1c gezeigten Anschlusseinrichtungen 120, 220, 320, die sich miteinander im Eingriff befinden, sind in einem verschwenkten Zustand. Aufgrund der entlang eines großen Anteils des Verschwenkradiusses angeordneten Kontaktstreifen 136, 236, 336 besteht mittels der sich berührenden Kontaktstreifen 136, 236, 336 der in Fig. 1a gezeigten Anschlusseinrichtung 120, 220, 320 und der Kontaktvorsprünge 122, 222, 322 der in Fig. 1b gezeigten Anschlusseinrichtung 120, 220, 320 an einer Vielzahl von Verschwenkwinkeln elektrischer Kontakt zwischen den beiden Anschlusseinrichtungen 120, 220, 320.

Fig. 1d zeigt eine zu der in Fig. 1a dargestellten Anschlusseinrichtung 120, 220, 320 ähnliche Anschlusseinrichtung 120, 220, 320 mit einem mittig auf dem Vorsprung 124, 224, 324 angeordneten Halteelement 140, 240, 340. Im Vergleich zu der in der Fig. 1a dargestellten Anschlusseinrichtung 120, 220, 320 sind bei der in Fig. 1d dargestellten Anschlusseinrichtung 120, 220, 320 die Kontaktstreifen 136, 236, 336 an den äußeren Rändern des Vorsprungs 124, 224, 324 angeordnet.

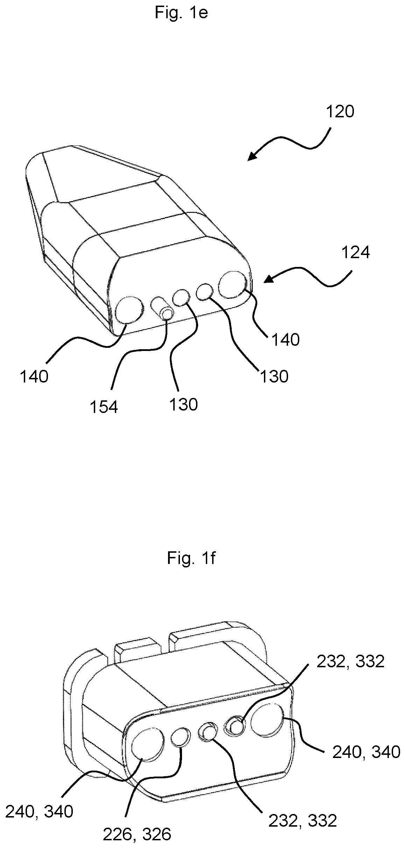

Fig. 1e zeigt eine als Stecker ausgebildete Anschlusseinrichtung 120. Ein solcher Stecker wird üblicherweise mit einer Ladeeinrichtung verwendet, die als Netzteil ausgebildet ist. Das heißt die Ladeeinrichtung selbst kann mit einem herkömmlichen Stecker für eine herkömmliche Steckdose versehen sein, der in eine Steckdose gesteckt wird. Die Ladeeinrichtung ist über ein Kabel mit der als Stecker ausgebildeten Anschlusseinrichtung 120 verbunden. An der Anschlusseinrichtung 120 ist dann ein Vorsprung 124 ausgeformt, in dem die Halteelemente 140 und die Kontaktelemente 130. Dier Kontaktelemente 130 und die Halteelemente 140 sind hier an den Berührstellen kreisförmig ausgebildet. Sie können aber auch streifenförmig geformt sein. Ferner ist die Anordnung der Kontaktelemente 130 vorzugsweise asymmetrisch angeordnet, so dass ein Verpolschutz bereitgestellt wird, indem nicht alle Kontaktelemente 130 miteinander verbunden werden können, wenn der Stecker verkehrt herum eingesteckt wird. Zusätzlich kann auch ein Positionierstift 154 vorgesehen sein, der insbesondere ebenfalls asymmetrisch (also hier nicht im Zentrum) angeordnet ist. So kann sichergestellt werden, dass der Stecker nur in einer vorbestimmten Ausrichtung eingesteckt werden kann.

In Fig. 1f ist das Gegenstück, also die zur Ausführungsform in Figur 1e komplementäre Anschlusseinrichtung dargestellt, die hier für einen Adapter oder für eine Haarschneidevorrichtung vorgesehen ist. Diese weist die komplementär angeordneten Kontaktelemente 232, 332 und Halteelemente 240, 340 auf. Ferner kann auch eine Positioniervertiefung 226, 326 zur Aufnahme des Positionierstifts 154 ausgebildet sein. Auch hier kann der Stecker der als Netzteil ausgebildeten Ladestation mit einer Aussparung oder Vertiefung ausgebildet sein und der Adapter bzw. die Haarschneidevorrichtung dann den Vorsprung 124 aufweisen.

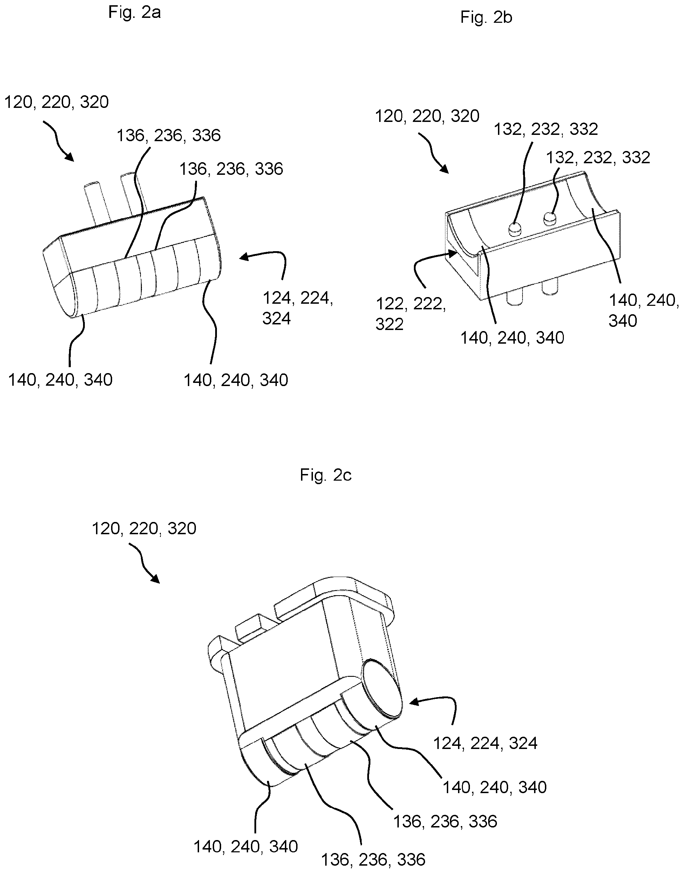

Fig. 2a zeigt eine zu der in Fig. 1a gezeigten Anschlusseinrichtung 120, 220, 320 ähnliche Anschlusseinrichtung 120, 220, 320 aufweisend zwei Halteelemente 140, 240, 340 mit streifenförmig ausgebildeter Kontaktfläche. Wird eine solche Anschlusseinrichtung 120, 220, 320 mit einer wie in Fig. 2b dargestellten Anschlusseinrichtung 120, 220, 320 - die ebenfalls streifenförmig ausgebildete Halteelemente 140, 240, 340 aufweist - in Eingriff gebracht, kann über eine Vielzahl von Verschwenkwinkeln sichergestellt werden, dass die Halteelemente 140, 240, 340 der beiden Anschlusseinrichtungen 120, 220, 320 einander berühren.

Fig. 2c zeigt eine zu der in Fig. 2a gezeigten Anschlusseinrichtung 120, 220, 320 ähnliche Anschlusseinrichtung 120, 220, 320 aufweisend zwei als Scheibenmagneten ausgebildete Halteelemente 140, 240, 340. Damit kann im Vergleich zur in Fig. 2a dargestellten Anschlusseinrichtung 120, 220, 320, die streifenförmige Halteelemente 140, 240, 340 aufweist, aufgrund der größeren Magnetwirkung der Scheibenmagnete eine höhere Haltekraft erzeugt werden.

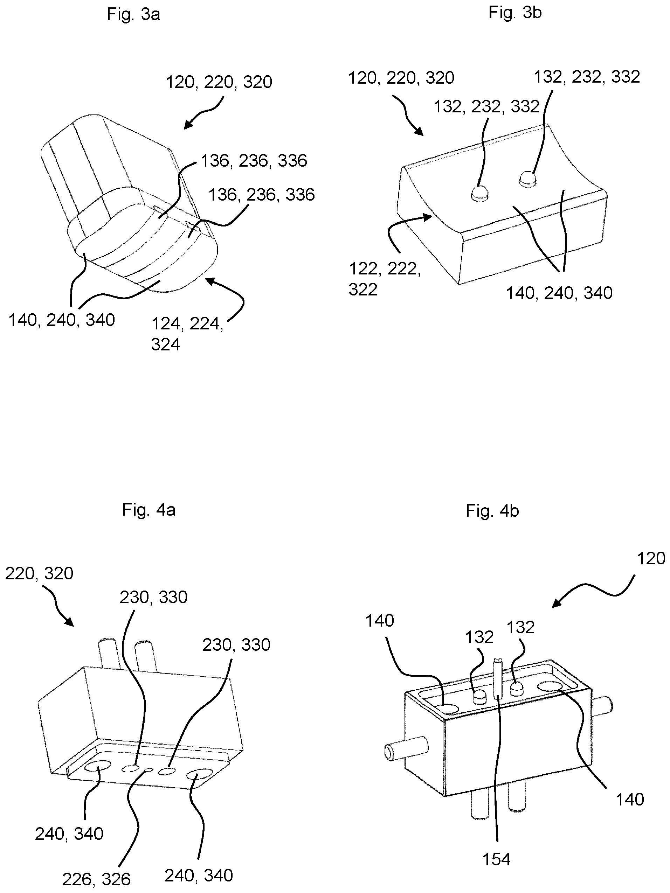

Fig. 3a zeigt eine zu den in den Fig. 1a, 2a und 2c gezeigten Anschlusseinrichtungen 120, 220, 320 ähnliche Anschlusseinrichtung 120, 220, 320, bei der die zwei als Kontaktstreifen 136, 236, 336 ausgebildeten Kontaktelemente zusammen mit dem Halteelement 140, 240, 340 den Vorsprung 124, 224, 324 vollständig abdecken. Die Kontaktstreifen 136, 236, 336 sind dabei - wie auch in den Fig. 1a und 2a gezeigt - vergleichsweise schmal ausgebildet, während das Halteelement 140, 240, 340 die Kontaktstreifen 136, 236, 336 vollständig umgibt und dementsprechend einen Großteil der sich beim Eingriff mit einer weiteren Anschlusseinrichtung 120, 220, 320 ausbildenden Kontaktfläche bedeckt. Derart kann eine sehr hohe Magnetwirkung und damit eine sehr hohe Haltekraft erzeugt werden.

Fig. 3b zeigt eine zur in Fig. 3a gezeigten Anschlusseinrichtung 120, 220, 320 komplementäre Anschlusseinrichtung 120, 220, 320, bei der die zwei als Kontaktvorsprung 132, 232, 332 ausgebildeten Kontaktelemente zusammen mit dem Halteelement 140, 240, 340 die Aussparung 122, 222, 322 vollständig abdecken. Wird eine wie in Fig. 3b dargestellte Anschlusseinrichtung 120, 220, 320 mit einer wie in Fig. 3a dargestellten Anschlusseinrichtung 120, 220, 320 kann eine sehr hohe Magnetwirkung und damit eine sehr hohe Haltekraft erzeugt werden.

Fig. 4a zeigt eine Anschlusseinrichtung 120, 220, 320 aufweisend eine Positioniervertiefung 226, 326 und Fig. 4b zeigt eine zur in Fig. 4a gezeigten Anschlusseinrichtung 120, 220, 320 komplementäre Anschlusseinrichtung 120, 220, 320 aufweisend einen Positionierstift 154. Werden die in Fig. 4a gezeigte Anschlusseinrichtung 120, 220, 320 und die in Fig. 4b gezeigte Anschlusseinrichtung 120, 220, 320 miteinander in Eingriff gebracht, gleitet der Positionierstift 154 in die Positioniervertiefung 226, 326. Dabei wird zum einen eine Stützwirkung erzeugt, die durch die Halteelemente 140, 240, 340 verstärkt wird, und zum anderen wird dafür gesorgt, dass die Kontaktelemente 130, 230, 330 mit den Kontaktvorsprüngen 132, 232, 332 in elektrischem Kontakt sind.

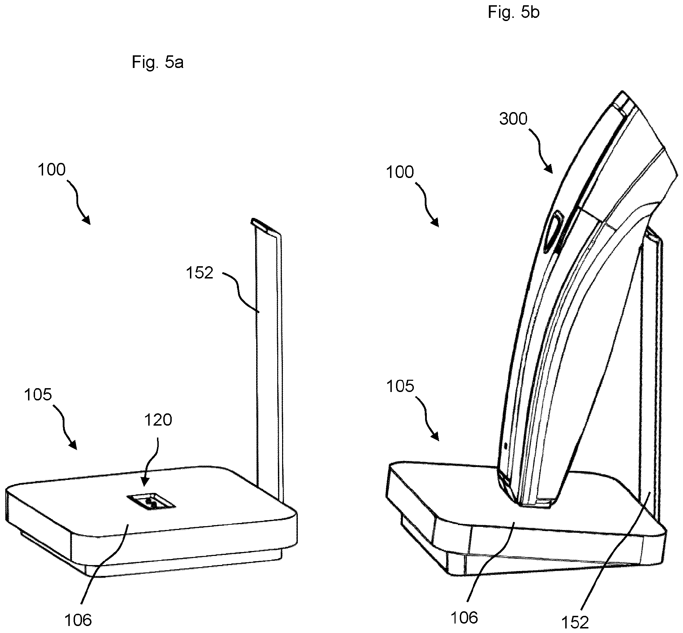

Fig. 5a zeigt eine Ladestation 100 aufweisend ein als Lehnelement 152 ausgebildetes Stützelement und Fig. 5b zeigt eine Kombination aus der in Fig. 5a gezeigten Ladestation 100 mit verkippter Lagerfläche 106 auf die eine Haarschneidevorrichtung 300 abgestellt ist. Die in Fig. 5b gezeigte Haarschneidevorrichtung 300 ist mit der Anschlusseinrichtung 120 elektrisch verbunden. Die Lagerfläche 106 wird zum sicheren Abstellen der Haarschneidevorrichtung 300 - wie in Fig. 5b dargestellt - verkippt, sodass die Haarschneidevorrichtung 300 das Lehnelement 152 berührt und durch dieses abgestützt wird.

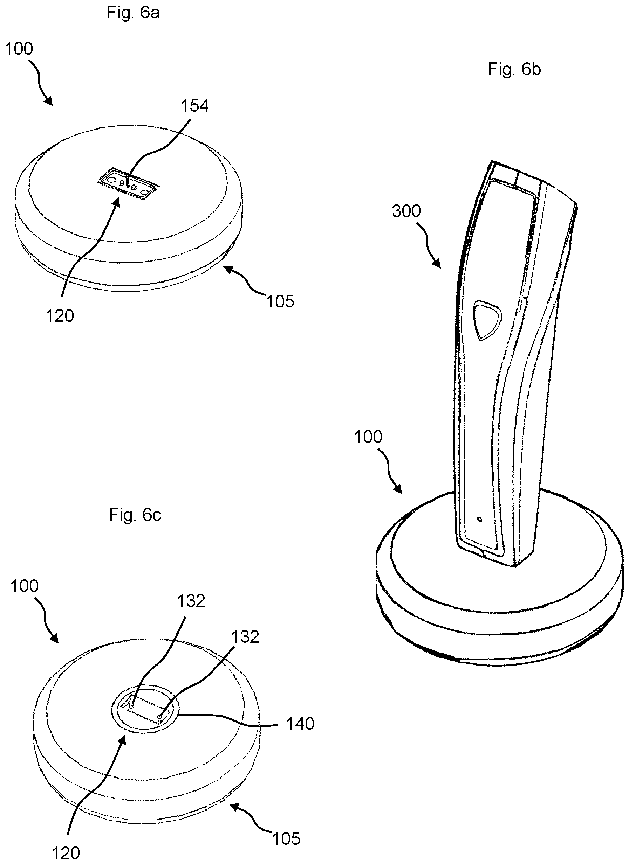

Fig. 6a zeigte eine Ladestation 100 aufweisend ein als Positionierstift 154 ausgebildetes Stützelement und Fig. 6b zeigt die die in Fig. 6a gezeigte Ladestation 100, auf die eine Haarschneidevorrichtung 300 abgestellt ist. Durch den in der Anschlusseinrichtung 120 angeordneten Positionierstift 154 wird die Haarschneidevorrichtung 300 derart gestützt, das - anders als bei der in Fig. 5b dargestellten Lösung - kein Lehnelement 152 erforderlich ist.

Fig. 6c zeigt eine zu der in Fig. 6a gezeigten Ladestation 100 ähnliche Ladestation 100 aufweisend ein als Ringmagneten ausgebildetes Halteelement 140. Der Ringmagnet kann dabei derart ausgestaltet sein, dass er auf ein in einer Anschlusseinrichtung einer Haarschneidevorrichtung angeordnetes Halteelement eine magnetisch abstoßende Wirkung ausübt und derart eine Positionierung und Stützung der Haarschneidevorrichtung erreicht wird. Ferner kann der Ringmagnet der Ladestation 100 auch derart ausgebildet sein, dass er auf ein in einer Anschlusseinrichtung einer Haarschneidevorrichtung angeordnetes Halteelement eine magnetisch anziehende Wirkung ausübt und derart eine Positionierung und Stützung der Haarschneidevorrichtung erreicht wird.

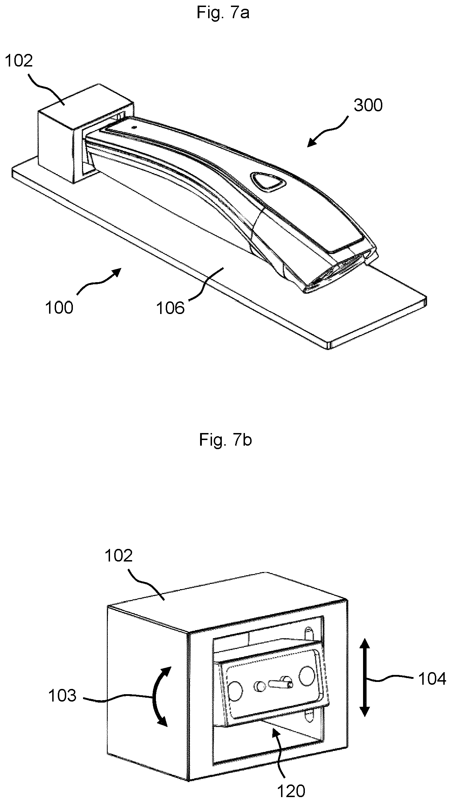

Fig. 7a zeigt eine Kombination aus einer Ladestation 100 aufweisend ein Anschlussgehäuse 102, in das eine Anschlusseinrichtung 120 integriert ist, und einer auf eine Lagerfläche 106 abgelegten Haarschneidevorrichtung 300; Fig. 7b zeigt das Anschlussgehäuse 102 und die in dieses integrierte Anschlusseinrichtung 120 der in Fig. 7a gezeigten Ladestation 100. Mit der dargestellten Ausführungsform kann die Ladestation 100 für Haarschneidevorrichtungen 300 mit unterschiedlicher Gehäusegeometrie - unterschiedlicher Abstand zwischen den Anschlusseinrichtungen der Haarschneidevorrichtungen 300 zur Lagerfläche 106 sowie unterschiedliche Winkelausrichtung der Anschlusseinrichtungen der Haarschneidevorrichtungen 300 zur Lagerfläche 106 im Zustand der abgelegten Haarschneidevorrichtung 300 - verwendet werden, indem die Anschlusseinrichtung 120 der Ladestation 100 entsprechend der benötigten Winkelausrichtung und des benötigten Abstands positioniert wird. Dafür kann die Anschlusseinrichtung 120 entlang des Linearpfeils 104 linear nach oben beziehungsweise unten verschoben werden und entlang des Drehpfeils 103 im Uhrzeigersinn und entgegen des Uhrzeigersinns verdreht werden.

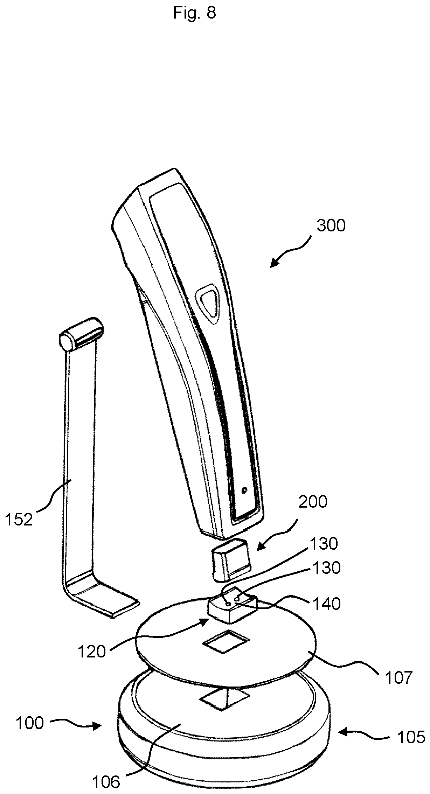

Fig. 8 zeigt eine Explosionsansicht einer Kombination aus einer Haarschneidevorrichtung 300, einem Adapter 200 und einer Ladestation 100 aufweisend eine Deckplatte 107. Der Adapter 200 ist zum Anpassen eines Steckkontakts der Haarschneidevorrichtung 300 ausgebildet und umfasst einen Hauptkörper mit einer Steckeinrichtung, die zum Anstecken des Adapters 200 an eine Anschlusseinrichtung der Haarschneidevorrichtung 300 ausgebildet ist. Der Adapter 200 weist ferner eine Anschlusseinrichtung 220 mit Vorsprung 224 auf-wie beispielsweise in den Fig. 1a, 1d, 2a, 2c, 3a dargestellt-, die mit einer Anschlusseinrichtung 120 der Ladestation 100 in Kontakt bringbar ist.

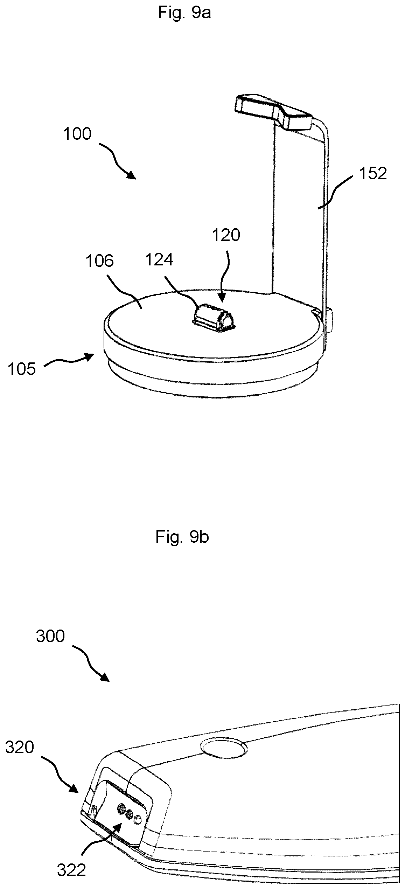

Fig. 9a zeigt eine Ladestation 100 mit einer Anschlusseinrichtung 120 aufweisend einen Vorsprung 124 und Fig. 9b zeigt einen unteren Teil einer mit der in Fig. 9a gezeigten Ladestation 100 verwendbare Haarschneidevorrichtung 300 mit einer eine Aussparung 322 aufweisenden Anschlusseinrichtung 320. Die Ladestation 100 weist ferner einen Hauptkörper 105 auf, der weiterhin eine Lagerfläche 106 aufweist. Die Lagerfläche 106 ist hierbei im Vergleich zu der in Fig. 8 dargestellten Lagerfläche 106 derart ausgestaltet, dass diese die oben liegende Seite des restlichen Hauptkörpers 105 überlappt. Im Vergleich zu der in Fig. 5b gezeigten Kombination aus einer Haarschneidevorrichtung 300 und einer Ladestation 100 muss bei Verwendung der in Fig. 9a gezeigten Ladestation 100 in Kombination mit der in Fig. 9b gezeigten Haarschneidevorrichtung 300 nicht die Lagerfläche 106 verkippt werden, sondern die Anschlusseinrichtung 120 der Ladestation 100 wird gegen die Anschlusseinrichtung 320 der Haarschneidevorrichtung 300 verschwenkt - siehe dazu beispielsweise der in Fig. 1c dargestellte verschwenkte Zustand zweier Anschlussvorrichtungen 120, 220, 320 -, sodass die Haarschneidevorrichtung 300 von dem Lehnelement 152 gestützt wird.

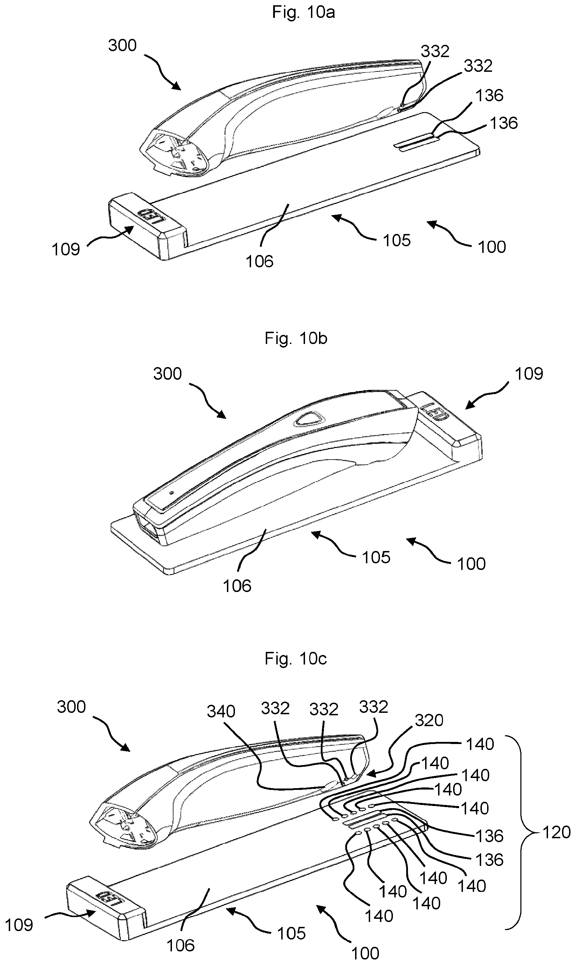

Fig. 10a zeigt eine Kombination aus einer Haarschneidevorrichtung 300 aufweisend zwei als Kontaktvorsprünge 332 ausgebildete Kontaktelemente und einer Ladestation 100 aufweisend zwei als Kontaktstreifen 136 ausgebildete Kontaktelemente und eine Statusanzeige 109 im Zustand unmittelbar vor der Ablage der Haarschneidevorrichtung 300; Fig. 10b zeigt die in Fig. 10a gezeigte Kombination aus einer Haarschneidevorrichtung 300 und einer Ladestation 100 im Zustand der abgelegten Haarschneidevorrichtung 300.

Fig. 10c zeigt eine zu der in den Fig. 10a und 10b gezeigten Kombination aus einer Haarschneidevorrichtung 300 und einer Ladestation 100 ähnliche Kombination aus einer Haarschneidevorrichtung 300 und einer Ladestation 100 aufweisend eine Vielzahl neben den Kontaktstreifen 136 der Ladestation 100 positionierter gegenüber den Halteelementen 340 der Haarschneidevorrichtung 300 magnetisch abstoßend wirkender Halteelemente 140 - hier zwei Reihen von jeweils fünf übereinander angeordneten Halteelemente 140. Derart wird die Anschlusseinrichtung 320 der Haarschneidevorrichtung 300 mittig zwischen den zwei Reihen der Halteelemente 140 zentriert, wodurch auch die Kontaktvorsprünge 332 derart auf den Kontaktstreifen 136 der Ladestation 100 positioniert werden, dass ein elektrischer Kontakt zwischen den Kontaktvorsprüngen 332 und den Kontaktstreifen 136 resultiert. Ist die Anschlusseinrichtung 320 der Haarschneidevorrichtung 300 korrekt mit der Anschlusseinrichtung 120 der Ladestation 100 ausgerichtet, kann dies über die Statusanzeige 109 angezeigt werden. Ferner kann die Statusanzeige 109 derart ausgebildet sein, dass mit dieser der Ladezustand der Batterieeinrichtung der Haarschneidevorrichtung 300 anzeigbar ist.

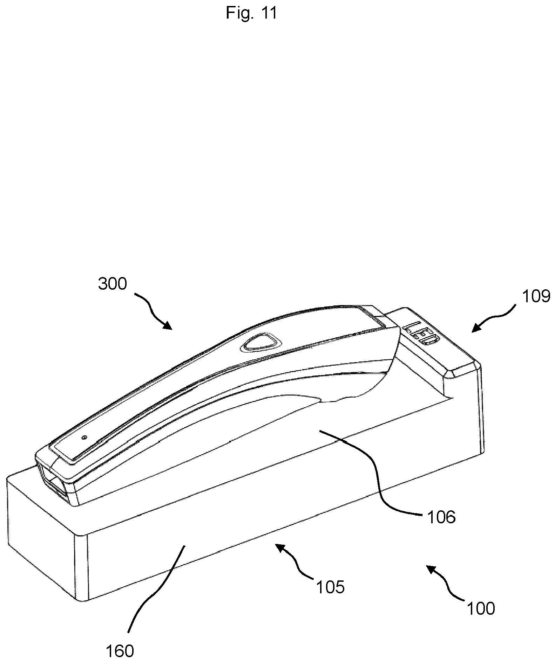

Fig. 11 zeigt eine Kombination aus einer Haarschneidevorrichtung 300 und einer eine Statusanzeige 109 und eine Batterieeinrichtung 160 aufweisenden Ladestation 100. Der Hauptkörper 105 ist dabei im Vergleich zu dem in den Fig. 10a bis 10c gezeigten Hauptkörper 105 wesentlich voluminöser ausgebildet, damit genügend Platz für die im Hauptkörper 105 angeordnete Batterieeinrichtung 106 vorhanden ist.

### Bezugszeichenliste

- 100: Ladestation
- 102: Anschlussgehäuse
- 103: Drehpfeil
- 104: Linearpfeil
- 105: Hauptkörper
- 106: Lagerfläche
- 107: Deckplatte
- 109: Statusanzeige
- 120: Anschlusseinrichtung
- 122: Aussparung
- 124: Vorsprung
- 130: Kontaktelement
- 132: Kontaktvorsprung
- 136: Kontaktstreifen
- 140: Halteelement
- 152: Lehnelement
- 154: Positionierstift
- 160: Batterieeinrichtung
- 200: Adapter
- 220: Anschlusseinrichtung
- 222: Aussparung
- 224: Vorsprung
- 226: Positioniervertiefung
- 230: Kontaktelement
- 232: Kontaktvorsprung
- 236: Kontaktstreifen
- 240: Halteelement
- 300: Haarschneidevorrichtung
- 320: Anschlusseinrichtung
- 322: Aussparung
- 324: Vorsprung
- 326: Positioniervertiefung
- 330: Kontaktelement
- 332: Kontaktvorsprung
- 336: Kontaktstreifen
- 340: Halteelement

## Patentansprüche

1. Ladestation (100) zum Aufladen einer Batterieeinrichtung in einer Haarschneidevorrichtung (300), umfassend
einen Hauptkörper (105); und
eine Anschlusseinrichtung (120) zum elektrischen Verbinden der Haarschneidevorrichtung (300) mit der Ladestation (100)
**dadurch gekennzeichnet, dass**
die Anschlusseinrichtung (120) zwei Kontaktelemente (130) und ein magnetisches, insbesondere permanentmagnetisches, oder magnetisch reaktives Halteelement (140) aufweist.

2. Ladestation (100) nach Anspruch 1, ferner umfassend zumindest ein Stützelement zum Halten der Haarschneidevorrichtung (300).

3. Ladestation (100) nach einem der vorhergehenden Ansprüche, ferner umfassend eine Batterieeinrichtung (160).

4. Adapter (200) zum Anpassen eines Steckkontakts einer Haarschneidevorrichtung (300), umfassend
einen Hauptkörper mit einer Steckeinrichtung, die zum Anstecken des Adapters (200) an eine Anschlusseinrichtung (220) einer Haarschneidevorrichtung (300) ausgebildet ist; und
eine Anschlusseinrichtung (220), die mit einer Anschlusseinrichtung (220) einer Ladestation (100) in Kontakt bringbar ist
**dadurch gekennzeichnet, dass**
die Anschlusseinrichtung (220) zwei Kontaktelemente (230) und ein magnetisches, insbesondere permanentmagnetisches, oder magnetisch reaktives Halteelement (240) aufweist.

5. Haarschneidevorrichtung (300) umfassend
eine Klingenanordnung zum Schneiden;
eine Antriebsvorrichtung, die die Klingenanordnung antreibt;
eine Batterieeinrichtung, die die Antriebsvorrichtung mit elektrischem Strom versorgt; und
eine Anschlusseinrichtung (320), die mit der Batterieeinrichtung elektrisch verbunden ist und die zum Aufladen der Batterieeinrichtung mit einer Anschlusseinrichtung (320) einer Ladestation (100) in Kontakt bringbar ist
**dadurch gekennzeichnet, dass**
die Anschlusseinrichtung (320) zwei Kontaktelemente (330) und ein magnetisches, insbesondere permanentmagnetisches, oder magnetisch reaktives Halteelement (340) aufweist.

6. Ladestation (100), Adapter (200) oder Haarschneidevorrichtung (300) nach einem der vorhergehenden Ansprüche, bei denen die Anschlusseinrichtung (120, 220, 320) eine nach innen gewölbte Aussparung (122, 222, 322) oder einen nach außen gewölbten Vorsprung (124, 224, 324) aufweist.

7. Ladestation (100), Adapter (200) oder Haarschneidevorrichtung (300) nach Anspruch 6, bei der/dem die zwei Kontaktelemente (130, 230, 330) zusammen mit dem zumindest einen Halteelement (140, 240, 340) die Aussparung (122, 222, 322) oder den Vorsprung (124, 224, 324) vollständig abdecken.

8. Ladestation (100), Adapter (200) oder Haarschneidevorrichtung (300) nach einem der vorhergehenden Ansprüche, bei der/dem zumindest eines der zwei Kontaktelemente (130, 230, 330) als Kontaktvorsprung (132, 232, 332), als Kontaktvertiefung und/oder als Kontaktstreifen (136, 236, 336) ausgebildet ist.

9. Ladestation (100), Adapter (200) oder Haarschneidevorrichtung (300) nach einem der vorhergehenden Ansprüche, bei der/dem zumindest zwei Halteelemente (140, 240, 340) vorgesehen sind und diese insbesondere magnetisch entgegengesetzt gepolt sind.

10. Ladestation (100), Adapter (200) oder Haarschneidevorrichtung (300) nach einem der vorhergehenden Ansprüche, bei der/dem zumindest eines der zwei Kontaktelemente (130, 230, 330) als magnetisches Halteelement (140, 240, 340) ausgebildet oder das Halteelement (140, 240, 340) benachbart zu dem Kontaktelement (130, 230, 330) angeordnet ist.

11. Ladestation (100), Adapter (200) oder Haarschneidevorrichtung (300) nach einem der vorhergehenden Ansprüche, bei der/dem das zumindest eine Halteelement (140, 240, 340) und/oder die zwei Kontaktelemente (130, 230, 330) eine runde, insbesondere kreisförmige, oder streifenförmige Kontaktfläche aufweisen.

12. Ladestation (100), Adapter (200) oder Haarschneidevorrichtung (300) nach einem der vorhergehenden Ansprüche, bei der/dem die Kontaktelemente (130, 230, 330) unterschiedlich formschlüssig ausgebildet sind.

13. Kombination aus einer Ladestation (100) nach einem der vorhergehenden Ansprüche und einer Haarschneidevorrichtung (300) nach einem der vorhergehenden Ansprüche oder einer Haarschneidevorrichtung aufweisend einen Adapter (200) nach einem der vorhergehenden Ansprüche, bei denen die Anschlusseinrichtungen (120, 220, 320) zueinander komplementär ausgebildet sind, insbesondere auch bezüglich der magnetischen Halteelemente (140, 240, 340).
